# EUROPÄISCHE PATENTSCHRIFT

(11) **EP 3 648 922 B1**
(45) Veröffentlichungstag und Bekanntmachung des Hinweises auf die Patenterteilung: **30.03.2022**
(21) Anmeldenummer: 18735320.6
(22) Anmeldetag: 04.07.2018
(51) Int. Cl.: B23K 9/167, B23K 9/28

(54) **SCHWEISSBRENNER**
WELDING TORCH
TORCHE DE SOUDAGE

(30) Priorität: 04.07.2017 EP 17179608
(43) Veröffentlichungstag der Anmeldung: 13.05.2020
(73) Patentinhaber: Fronius International GmbH, 4643 Pettenbach (AT)
(72) Erfinder: PÜHRINGER, Stefan, 4600 Wels-Thalheim (AT); WILLINGER, Martin, 4600 Wels-Thalheim (AT); RAXENDORFER, Josef, 4600 Wels-Thalheim (AT); OBERNDORFER, Klaus, 4600 Wels-Thalheim (AT)
(74) Vertreter: Isarpatent
(86) Internationale Anmeldenummer: PCT/EP2018/068080
(87) Internationale Veröffentlichungsnummer: WO 2019/008028

(56) Entgegenhaltungen:
- CN-A- 106 001 861
- CN-A- 106 001 861
- DE-A1-102012 223 214
- FR-A- 1 201 515
- FR-A- 1 201 515
- US-A- 3 250 889
- US-A- 3 309 492
- US-A- 3 309 492

## Beschreibung

Die Erfindung betrifft einen Schweißbrenner mit einer Einspannvorrichtung zum Einspannen und Kühlen einer nicht abschmelzbaren Schweißelektrode, insbesondere einer Wolframelektrode für WIG-Hochleistungsschweißen.

Beim Lichtbogenschweißen können nicht abschmelzbare Schweißelektroden eingesetzt werden. Dabei brennt ein Lichtbogen zwischen der nicht abschmelzbaren Schweißelektrode und einem Werkstück. Der Lichtbogen und die Schweißzone werden herkömmlicherweise durch einen Mantel aus inertem Gas oder einem Gasgemisch mit aktiven Bestandteilen geschützt. Herkömmliche Schweißbrenner weisen ein die Schweißelektrode fixierendes Stromkontaktrohr auf, das ein Klemmelement für die nicht abschmelzbare Schweißelektrode besitzt. Weiterhin verfügt ein herkömmlicher Schweißbrenner üblicherweise über eine Schutzgasdüse, welche das Stromkontaktrohr und die nicht abschmelzbare Schweißelektrode umschließt. Unter einem bestimmten Winkel kann ein Schweißzusatzdraht zugeführt werden, von welchem ein Materialübertrag auf das zu schweißende Werkstück erfolgt. Während des Schweißprozesses wird der sich zwischen der Schweißelektrode und dem Werkstück ausbildende Lichtbogen von einer Energiequelle gespeist, welche von einer Steuerungseinrichtung gesteuert wird. Bei herkömmlichen Schweißbrennern, insbesondere bei Hochleistungsschweißbrennern, wird die nicht abschmelzbare Schweißelektrode, beispielsweise eine Wolframschweißelektrode, in einen Elektrodenhalter zur Fixierung eingepresst, eingelötet oder fest eingeschraubt.

Ein derartiger Elektrodenhalter für einen Schweißbrenner hat den Nachteil, dass die nicht abschmelzbare Schweißelektrode überhaupt nicht oder nur mit erheblichem technischen Aufwand austauschbar ist. Weiterhin ist die innerhalb des Elektrodenhalters fixierte Schweißelektrode in Längsrichtung des Elektrodenhalters nicht verschiebbar, sodass nicht einstellbar ist, wie weit die Elektrodenspitze der Schweißdrahtelektrode aus dem jeweiligen Schweißbrenner hervorsteht.

In der US 3 309 492 A wird ein Schweißbrenner mit einer Einspannvorrichtung beschrieben, welche einen Elektrodenhalter mit einem sich kegelförmig verbreiternden Endabschnitt und einem Spannkörper aufweist. Der Spannkörper weist an einem vorderen Ende eine geneigte Oberfläche auf, an welcher der Endabschnitt des Elektrodenhalters anliegt. Ein zentraler Abschnitt des Spannkörpers bildet gemeinsam mit einem Mantelteil eine Kammer, in welche über einen Einlass ein Kühlfluid einführbar ist. Diese Kammer endet in Bezug auf die Längsachse des Schweißbrenners axial beabstandet vor dem kegelförmigen Endabschnitt des Elektrodenhalters.

In der US 3 250 889 A, welche die Basis des Anspruchs 1 bildet, wird ein weiterer Schweißbrenner mit einem Elektrodenhalter und einer von einem Fluid durchströmbaren Kühlkammer offenbart.

Es ist eine Aufgabe der vorliegenden Erfindung, einen Schweißbrenner mit einer Einspannvorrichtung zum Einspannen einer nicht abschmelzbaren Schweißelektrode zu schaffen, welche es erlaubt, eine nicht abschmelzbare Schweißelektrode bei Bedarf schnell und einfach auszutauschen, und welche eine verbesserte Kühlung aufweist.

Diese Aufgabe wird erfindungsgemäß gemäß einem ersten Aspekt durch einen Schweißbrenner mit einer Einspannvorrichtung zum Einspannen einer nicht abschmelzbaren Schweißelektrode mit den in Patentanspruch 1 angegebenen Merkmalen gelöst.

Der erfindungsgemäße Schweißbrenner bietet als Vorteil, dass dessen Schweißelektrode durch dessen Einspannvorrichtung effizient gekühlt wird.

Die Erfindung schafft einen Schweißbrenner mit einem Innenrohr, das von einem Außenrohr umschlossen ist, und mit einer Einspannvorrichtung zum Einspannen einer nicht abschmelzbaren Schweißelektrode, wobei die Einspannvorrichtung einen Spann-Kühlkörper und einen Elektrodenhalter aufweist, der einen in Längsrichtung verlaufenden Aufnahmeraum zur Aufnahme der Schweißelektrode besitzt, welcher an seinem vorderen Ende einen verengten Spannbereich aufweist, wobei der Spannbereich in einen verbreiterten Aufnahmeraum übergeht, wobei der Elektrodenhalter an seinem vorderen Ende einen Endabschnitt aufweist, welcher sich zum vorderen Ende kegelförmig verbreitert und von dem Spann-Kühlkörper der Einspannvorrichtung zum Halten der Schweißelektrode zusammenpressbar ist, wobei der Spann-Kühlkörper in einem eingespannten Zustand der Einspannvorrichtung mechanisch gegen eine Mantelfläche des kegelförmigen Endabschnitts des Elektrodenhalters gedrückt wird, so dass im eingespannten Zustand eine großflächige Kühlstirnfläche zum Kühlen der Schweißelektrode ausgebildet ist.

Die Einspannvorrichtung bietet den Vorteil, dass die in den Aufnahmeraum einsetzbare Schweißelektrode einfach und schnell einsetzbar sowie bei Bedarf austauschbar ist. Ein weiterer Vorteil der Einspannvorrichtung besteht darin, dass die Position der eingesetzten Schweißelektrode vor dem Festspannen in Längsrichtung einstellbar ist, wodurch eine Einstellung des freien Elektrodenendes möglich ist. Der Nutzer hat somit eine gewisse Flexibilität bei der Schweißposition. Darüber hinaus ist die Einspannvorrichtung durch einen Nutzer, insbesondere Schweißer, in besonders einfacher Weise bedienbar. Ein weiterer Vorteil besteht darin, dass der Austausch einer Schweißelektrode werkzeuglos erfolgen kann. Der Wechsel einer Schweißelektrode kann zudem durchgeführt werden, ohne dass ein Kühlfluid ausströmt. Weiterhin ist es möglich, eine eingesetzte Schwei-ßelektrode zum Nachschleifen seiner Elektrodenspitze zur Vergrößerung des freien Elektrodenendes nach vorne zu verschieben und nach erfolgtem Schleifvorgang wieder zurück in den Aufnahmeraum des Elektrodenhalters zu schieben. Die Einspannvorrichtung bildet somit ein Schnellspannsystem für eine nicht abschmelzbare Schweißelektrode, die sich auch für sehr hohe elektrische Ströme eignet. Die Einspannvorrichtung erlaubt zudem ein freies axiales Verschieben bzw. Fixieren der Schweißelektrode, wodurch die Charakteristik des entstehenden Lichtbogens verändert werden kann.

Erfindungsgemäß ist der Spann-Kühlkörper zum Kühlen eines freien Elektrodenendes der Schweißelektrode mittels eines den Spann-Kühlkörper durchströmenden oder an dem Spann-Kühlkörper vorbeiströmenden Kühlfluids vorgesehen.

Dies bietet den Vorteil, dass eine ausgezeichnete Kühlung nahe der Elektrodenspitze der Schweißelektrode und somit eine relativ kühle Schweißelektrode während eines Hochleistungsschweißprozesses gewährleistet ist.

Erfindungsgemäß weist der Spann-Kühlkörper ferner einen von dem Kühlfluid durchströmten, bevorzugt von Dichtungsringen begrenzten Fluidraum auf, der in einem eingespannten Zustand der Einspannvorrichtung den kegelförmigen Endabschnitt des Elektrodenhalters zur Kühlung des freien Endes der darin eingesetzten Schweißelektrode umschließt, wobei das Kühlmedium über eine Zuführleitung zwischen dem Innenrohr und dem Außenrohr dem Fluidraum zuführbar und über eine Abführleitung zwischen dem Innenrohr und dem Außenrohr ableitbar ist.

Bei einer weiteren möglichen Ausführungsform des Schweißbrenners weist der kegelförmige Endabschnitt des Elektrodenhalters radial angeordnete durch Spannschlitze getrennte Spannbacken auf, die in dem eingespannten Zustand der Einspannvorrichtung zum Anpressen des kegelförmigen Endabschnitts des Elektrodenhalters an die in den Aufnahmeraum des Elektrodenhalters eingesetzte Schweißelektrode vorgesehen sind.

Erfindungsgemäß weist der Aufnahmeraum des Elektrodenhalters an seinem vorderen Ende einen leicht verengten Spannbereich auf, welcher in einen verbreiterten Aufnahmebereich übergeht. Dieser Spannbereich ist vorzugsweise zwischen 4 und 10 mm lang.

Bei einer weiteren möglichen Ausführungsform des Schweißbrenners ist die in dem Aufnahmeraum des Elektrodenhalters eingesetzte Schweißelektrode in einem nicht gespannten Zustand der Einspannvorrichtung in dem Aufnahmeraum des Elektrodenhalters zum Einstellen eines freien Elektrodenendes der Schweißelektrode axial bzw. in Längsrichtung verschiebbar.

Bei einer weiteren möglichen Ausführungsform des Schweißbrenners weist der sich kegelförmig verbreiternde Endabschnitt des Elektrodenhalters einen Öffnungswinkel auf, der in einem Bereich von 20° bis 45°, insbesondere 30, liegt.

Bei einer weiteren möglichen Ausführungsform des Schweißbrenners weist der sich kegelförmig verbreiternde Endabschnitt des Elektrodenhalters radial gleichmäßig beabstandete Spannbacken auf.

Bei einer anderen Ausführungsform des Schweißbrenners weist der sich kegelförmig verbreiternde Endabschnitt des Elektrodenhalters sechs radial gleichmäßig beabstandete Spannbacken auf.

Bei einer weiteren möglichen Ausführungsform des Schweißbrenners ist der Spann-Kühlkörper von einer Gasdüse zur Abgabe eines Schutzgases umschlossen.

Bei einer weiteren möglichen Ausführungsform des Schweißbrenners ist die Schweißelektrode eine Wolframelektrode.

Bei einer weiteren möglichen Ausführungsform des Schweißbrenners weist der Elektrodenhalter im Bereich seines hinteren Endes ein Gewinde auf, das zum Aufschrauben einer Brennerkappe dient.

Bei einer weiteren möglichen Ausführungsform des Schweißbrenners kann der Elektrodenhalter, in dessen Aufnahmeraum von vorne eine Schweißelektrode eingesetzt ist, manuell durch Aufschrauben einer Brennerkappe derart nach hinten gezogen werden, dass die Mantelfläche des an dem vorderen Ende des Elektrodenhalters vorgesehenen kegelförmigen Endabschnitts beim Aufschrauben gegen eine entsprechende kegelförmige Öffnung des Spann-Kühlkonus gedrückt wird, wobei aufgrund der in dem Endabschnitt des Elektrodenhalters vorhandenen Spannschlitze die Spannbacken des Endabschnitts des Elektrodenhalters beim Aufschrauben gegen die in dem Aufnahmeraum des Elektrodenhalters eingesetzte Schweißelektrode gepresst werden, um die Schweißelektrode zentrisch zu halten.

Bei einer weiteren möglichen Ausführungsform der erfindungsgemäßen Einspannvorrichtung weist der den Elektrodenhalter umfassende Spann-Kühlkörper eine kegelförmige Öffnung auf, welche die Mantelfläche des Endabschnitts des Elektrodenhalters umschließt und welche einen entsprechenden Öffnungswinkel aufweist.

Im Weiteren werden mögliche Ausführungsformen des erfindungsgemäßen Schweißbrenners unter Bezugnahme auf die beigefügten Figuren näher erläutert.

Es zeigen:
- Figur 1: eine Schnittansicht durch eine mögliche Ausführungsform eines erfindungsgemäßen Schweißbrenners, welcher eine Einspannvorrichtung zum Einspannen einer nicht abschmelzbaren Schweißelektrode gemäß einem Aspekt der vorliegenden Erfindung aufweist;
- Figur 2: eine perspektivische Schnittansicht des in Figur 1 dargestellten Schweißbrenners;
- Figur 3: eine weitere perspektivische Ansicht des in Figur 1 geschnitten dargestellten Schweißbrenners;
- Figur 4: ein Ausführungsbeispiel eines in der Einspannvorrichtung vorgesehenen Elektrodenhalters;
- Figur 5: eine Schnittansicht durch den in Figur 4 dargestellten Elektrodenhalter;
- Figur 6: eine weitere Ansicht des in Figur 4 dargestellten Elektrodenhalters;
- Figur 7: eine Ansicht auf eine Stirnseite eines Endabschnitts des in Figur 4 dargestellten Elektrodenhalters von vorne;
- Figur 8: eine perspektivische Ansicht des in Figur 4 dargestellten Elektrodenhalters;
- Figur 9: eine perspektivische Ansicht eines Ausführungsbeispiels eines in der Einspannvorrichtung verwendeten Spann-Kühlkörpers;
- Figur 10: eine Schnittansicht durch den in Figur 9 dargestellten Spann-Kühlkörpers;
- Figur 11: eine schematische Schnittansicht durch eine beispielhafte Ausführungsform eines erfindungsgemäßen Schweißbrenners zur Darstellung des darin vorgesehenen Kühlsystems;
- Figur 12: eine entsprechende schematische Schnittansicht durch einen herkömmlichen Schweißbrenner mit herkömmlichem Kühlsystem.

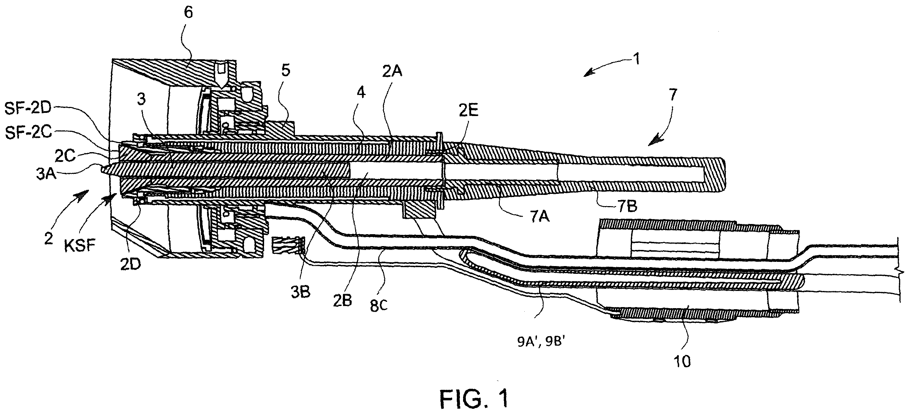

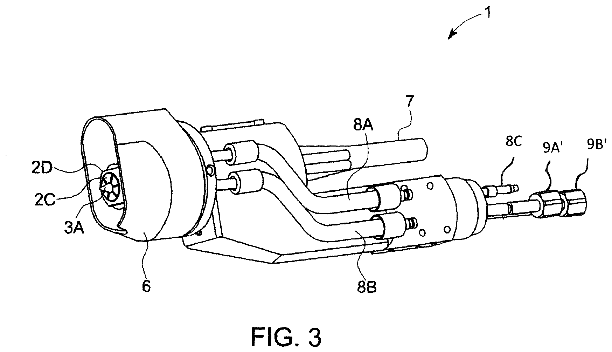

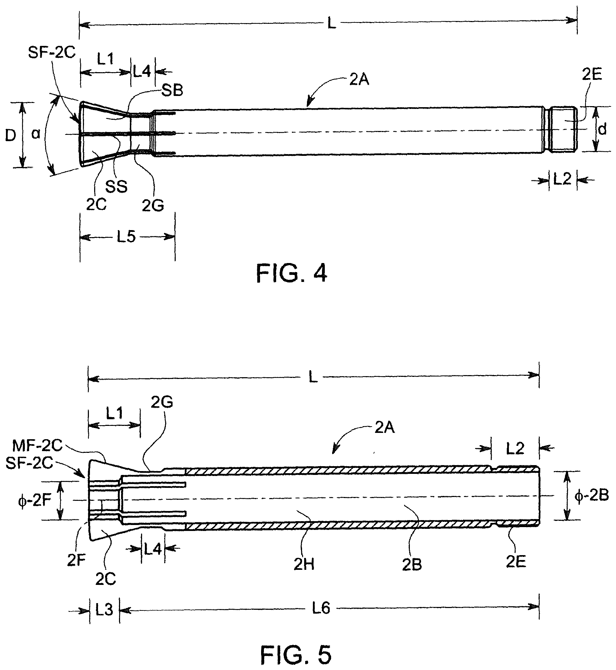

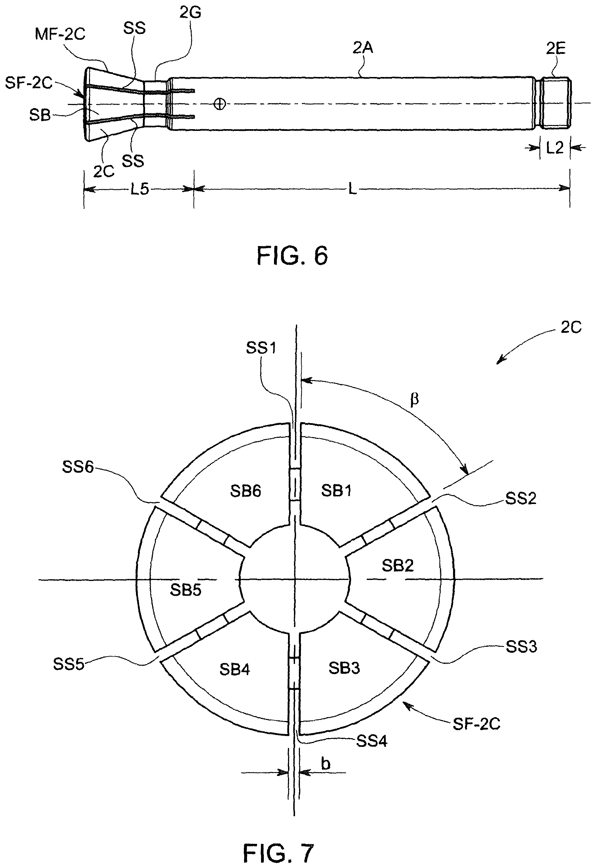

Figur 1 zeigt ein Ausführungsbeispiel eines Schweißbrenners 1, der eine Einspannvorrichtung 2 zum Einspannen einer nicht abschmelzbaren Schweißelektrode 3 aufweist. Die nicht abschmelzbare Schweißelektrode 3 ist beispielsweise eine Wolframschweißelektrode. Figur 1 zeigt eine Schnittansicht durch den Schweißbrenner 1. Die nicht abschmelzbare Schweißelektrode 3 wird durch die Einspannvorrichtung 2 gehalten. Wie aus der in Figur 3 dargestellten Schnittansicht erkennbar, weist die Einspannvorrichtung 2 einen Elektrodenhalter 2A auf, der einen in Längsrichtung verlaufenden im Wesentlichen zylindrischen hohlen Aufnahmeraum 2B zur Aufnahme der darin einsetzbaren Schweißelektrode 3 besitzt. Die Bohrung bzw. der Aufnahmeraum 2B weist vorzugsweise keinen gleichmäßigen Durchmesser auf. Der Durchmesser der Bohrung ist im vorderen Bereich bzw. Spannbereich 2F (Länge L3) etwas geringer als im hinteren Bereich 2H (Länge L6) des Elektrodenhalters 2A, wie in der Schnittansicht gemäß Fig. 5 erkennbar. Die Klemmung der Schweißelektrode 3 erfolgt dabei nur im vorderen Spannbereich 2F, so dass dort eine besonders gute Kühlung erzielt wird. Der Elektrodenhalter 2A weist an seinem vorderen Ende einen Endabschnitt 2C auf. Dieser Endabschnitt 2C verbreitert sich kontinuierlich kegelförmig nach vorne und besitzt eine Mantelfläche MF-2C sowie eine ringförmige Stirnfläche SF-2C, die zusammen mit einer sie umschließenden ringförmigen Stirnfläche SF-2D eines Spannkühlkörpers 2D eine großflächige Kühlstirnfläche KSF der Schweißelektrode 3 im eingespannten Zustand der Einspannvorrichtung 2 bildet. Die Einspannvorrichtung 2 besitzt neben dem Elektrodenhalter 2A den in Fig. 1 gezeigten Spann-Kühlkörper 2D. Der Spann-Kühlkörper 2D weist eine kegelförmige Öffnung 2D-ÖFF auf, die den kegelförmigen Endabschnitt 2C des Elektrodenhalters 2A umschließt, wie in der Schnittansicht der Figur 1 dargestellt. Der sich kegelförmig nach vorne verbreiternde Endabschnitt 2C des Elektrodenhalters 2A ist von dem Spann-Kühlkörper 2D zum Halten der Schweißelektrode 3 zusammenpressbar. Der Spann-Kühlkörper 2D wird in einem eingespannten Zustand der Einspannvorrichtung 2 des Schweißbrenners 1 mechanisch gegen eine Mantelfläche MF-2C des kegelförmigen Endabschnitts 2C des Elektrodenhalters 2A gedrückt, wie in der Schnittansicht gemäß Figur 1 dargestellt. Der Elektrodenhalter 2A hält im eingespannten Zustand die Schweißelektrode 3 zentrisch fest und hat eine großflächige Kühlstirnfläche KSF, welche aus den Stirnflächen der in Fig. 7 gezeigten zusammengepressten Spannbacken SB und den der ringförmigen Stirnfläche SF-2D des die Spannbacken SB umschließenden, diese zusammenpressenden Kühlspannkonus 2D gebildet wird. Die Schwei-βelektrode 3, beispielsweise eine Wolframschweißelektrode, ist eine nicht abschmelzbare Elektrode, welche während des Schweißvorgangs nicht abgeschmolzen wird. Wie in der Schnittansicht gemäß Figur 1 dargestellt, ist die Schwei-βelektrode 3 vorzugsweise zylindrisch wie ein Stift ausgebildet und besitzt vorne eine Elektrodenspitze 3A. Der zylindrisch ausgebildete Körper 3B der Schweißelektrode 3 ist innerhalb des zylindrisch ausgeformten Aufnahmeraumes 2B des Elektrodenhalters 2A von vorne bei einem nicht eingespannten Zustand der Einspannvorrichtung 2 durch den Spannbereich 2F hindurch einführbar und vor dem Festspannen axial verschiebbar. Im nicht eingespannten Zustand kann somit das freie Ende der nicht abschmelzbaren Schweißelektrode 3 noch manuell eingestellt bzw. justiert werden. Auf diese Weise wird festgelegt, wie weit die Elektrodenspitze 3A der Schweißelektrode 3 für den Schweißprozess aus dem Schweißbrenner 1 nach vorne hervorragt. Der sich kegelförmig verbreiternde Endabschnitt 2C des Elektrodenhalters 2A besitzt bei einer möglichen Ausführungsform einen Öffnungswinkel α in einem Bereich von 20° bis 45°, vorzugsweise etwa 30°. Der Kühlkörper 2D besitzt vorzugsweise vorne eine entsprechende kegelförmige Öffnung mit einem entsprechenden Öffnungswinkel von 20° bis 45°. Der Spann-Kühlkonus bzw. Spann-Kühlkörper 2D dient zum Kühlen des freien Elektrodenendes der Schweißelektrode 3 mittels eines den Kühlkörper 2D durchströmenden oder an ihm vorbeiströmenden Kühlfluids. Der sich kegelförmig verbreiternde Endabschnitt 2C des Elektrodenhalters 2A besitzt bei einer möglichen Ausführungsform radial gleichmäßig beabstandete, durch Spannschlitze SS getrennte Spannbacken SB. Bei einer möglichen Ausführungsform weist der sich kegelförmig verbreiternde Endabschnitt 2C des Elektrodenhalters 2A sechs radial gleichmäßig beabstandete Spannschlitze SS auf, wie beispielsweise in Figur 7 dargestellt ist.

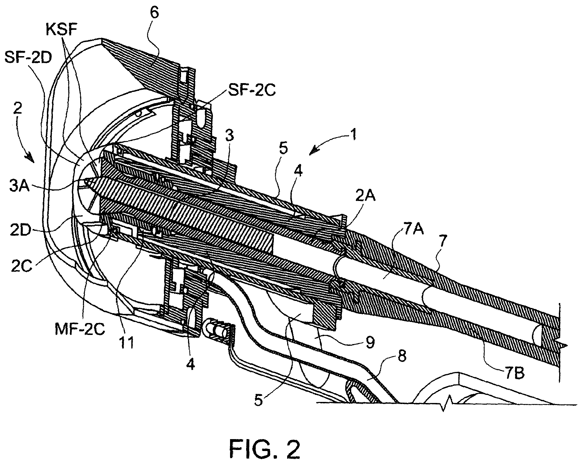

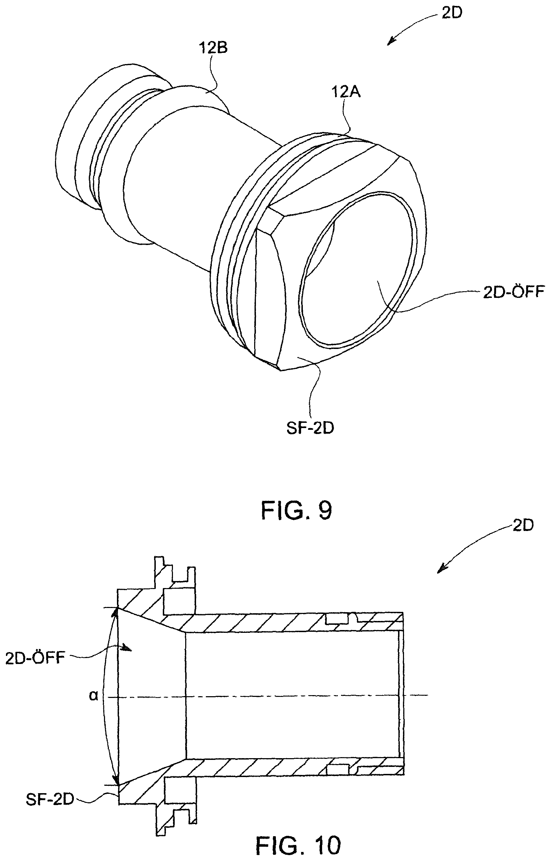

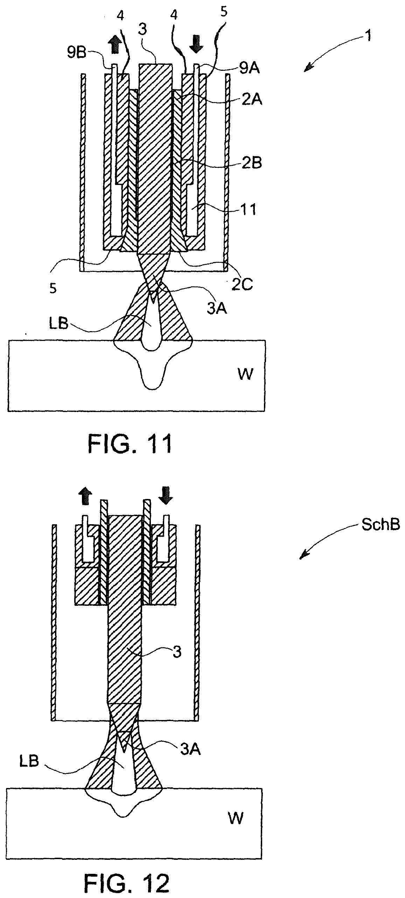

Fig. 7 zeigt eine vordere Stirnseite bzw. Stirnfläche SF-2C des Endabschnitts 2C des Elektrodenhalters 2A, die mit einer vorderen Stirnfläche SF-2D des in Fig. 9 dargestellten Spann-kühlkonus 2D abschließt, wie in Fig. 12 erkennbar. Dies fördert die Kühlung im Bereich der Klemmung der Schweißelektrode 3. Die Stirnfläche SF-2C des Endabschnitts 2C bildet im geklemmten Zustand eine Ebene mit der Stirnfläche SF-2C des kegelförmigen Endabschnitts 2C. Die Stirnfläche SF-2D des Kühlkonus 2D ist ringförmig und umschließt die ebenfalls ringförmige Stirnfläche SF-2C des Endabschnitts 2C, wie in Fig. 2 erkennbar.

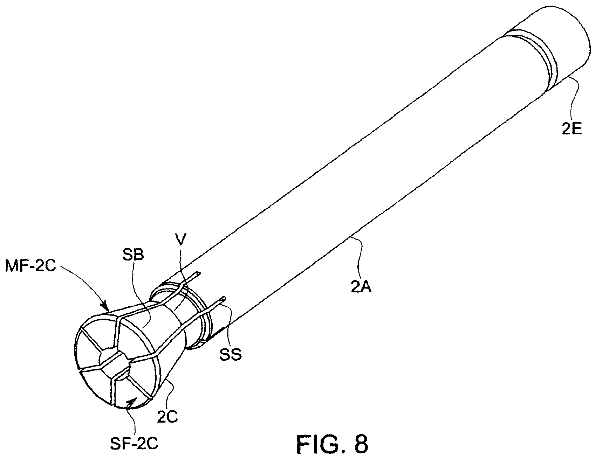

Der kegelförmige Endabschnitt 2C des Elektrodenhalters 2A besitzt radial angeordneten Spannschlitze SS, die in dem eingespannten Zustand der Einspannvorrichtung 2 zum Anpressen von Klemmbacken bzw. Spannbacken SB des kegelförmigen Endabschnitts 2C des Elektrodenhalters 2A an die in dem Aufnahmeraum 2B des Elektrodenhalters 2A eingesetzte Schweißelektrode 3 vorgesehen sind. Die Spannbacken SB weisen vorzugsweise Verjüngungen bzw. Verengungen auf, damit sie einfach zusammenpressbar sind, wie in Fig. 8 dargestellt. Die Stirnseiten der Spannbacken SB1 bis SB6 bilden zusammen die geschlitzte Stirnfläche SF-2C des Endabschnitts 2C, wie in Fig. 7 dargestellt. Die Stirnfläche SF-2C ist möglichst groß um eine besonders gute Kühlung der Schweißelektrode 3 zu gewährleisten. Die ringförmige Stirnfläche SF-2C des Endabschnitts 2C wird im gespannten Zustand der Einspannvorrichtung 2 von der daran angepressten ebenfalls ringförmigen Stirnfläche SF-2D des Kühlkörpers 2D fest bzw. nahtlos umschlossen, wodurch eine besonders große Kühlstirnfläche KSF entsteht, die beide Stirnflächen SF-2C, SF-2D umfasst (KSF = SF-2C + SF-2D).

Bei dem in Figur 1 dargestellten Ausführungsbeispiel ist der Elektrodenhalter 2A in einem Innenrohr 4 des Schweißbrenners 1 vorgesehen. Bei einer möglichen Ausführungsform weist das Innenrohr 4 zusätzlich Kühlmittel auf. Diese Kühlmittel werden beispielsweise durch Kühlrippen oder von einem Kühlmedium durchströmte Kühlkanäle gebildet. Das Innenrohr 4 wird bei dem in Figur 1 dargestellten Ausführungsbeispiel durch ein Außenrohr 5 umschlossen. Der Spann-Kühlkörper 2D ist bei dem in Figur 1 dargestellten Ausführungsbeispiel in das Innenrohr 4 des Schweißbrenners 1 eingesetzt oder eingeschraubt. Das Außenrohr 5 des Schweißbrenners 1 mit dem darin befindlichen Spann-Kühlkörper 2D wird bei der in Figur 1 dargestellten Ausführungsform von einer Gasdüse 6 umschlossen. Die Gasdüse 6 dient zur Abgabe eines Schutzgases. Der Elektrodenhalter 2A weist an seinem hinteren Ende ein Befestigungsmittel zum Anbringen einer Brennerkappe 7 auf. Bei einer möglichen Ausführungsform weist der Elektrodenhalter 2A an seinem hinteren Ende ein Gewinde 2E zum Anschrauben der Brennerkappe 7 auf. Bei dem in Figur 1 dargestellten Ausführungsbeispiel weist die Brennerkappe 7 beispielsweise einen aus Kupfer bestehenden Kern 7A und einen aus Kunststoff bestehenden Griff 7B auf. Man erkennt in der Schnittansicht gemäß Figur 1 am hinteren Ende des Elektrodenhalters 2A ein Außengewinde 2E, auf das ein Innengewinde des Kupferkerns 7A der Brennerkappe 7 aufgeschraubt werden kann, um eine Anpresskraft der Spannbacken SB einzustellen. Der Elektrodenhalter 2A, in dessen zylinderförmigen Aufnahmebohrung bzw. Aufnahmeraum 2B von vorne die Schweißelektrode 3 durch den Spannbereich 2D hindurch eingesetzt bzw. eingeschoben ist, kann durch Aufschrauben der an dem Elektrodenhalter 2A angebrachten Brennerkappe 7 nach hinten gezogen werden. Beispielsweise wird der Kunststoffgriff 7B der Brennerkappe 7 manuell durch einen Nutzer gedreht, um den Elektrodenhalter 2A nach hinten zu ziehen. Hierdurch wird die Mantelfläche MF-2C des an dem vorderen Ende des Elektrodenhalters 2A vorgesehenen sich kegelförmig verbreiternden Endabschnitts 2C in die entsprechende kegelförmige Öffnung des Spann-Kühlkörpers 2D gedrückt. Aufgrund der in dem Endabschnitt 2C des Elektrodenhalters 2A vorhandenen Spannschlitze SS werden die Spannbacken SB des Endabschnitts 2C des Elektrodenhalters 2A gegen die in dem Aufnahmeraum 2B des Elektrodenhalters 2A eingesetzte Schweißelektrode 3 vorne im Spannbereich 2F gepresst, um die Schwei-βelektrode 3 im eingespannten Zustand fest zentrisch zu halten. Der Spann-Kühlkörper 2D, welcher die Mantelfläche MF-2C des Endabschnitts 2C des Elektrodenhalters 2A umschließt, besitzt einen entsprechenden Öffnungswinkel a, wobei aufgrund der vorhandenen radial angeordneten Spannschlitze SS die Anpressbacken bzw. Spannbacken SB des Endabschnitts 2C gegen die Außenfläche des Körpers 3B der Schweißelektrode 3 gepresst werden, um im eingespannten Zustand der Einspannvorrichtung 2 die Schweißelektrode 3 fest zentrisch zu fixieren. Im eingespannten Zustand kann die Schweißelektrode 3 nicht mehr lateral bzw. axial verschoben werden. Mithilfe des Spann-Kühlkörpers 2D wird im eingespannten Zustand ein hoher mechanischer Druck vorne im Spannbereich 2F auf die Kontakt- bzw. Mantelfläche der zylinderförmigen Schweißelektrode 3 ausgeübt. Durch die gekühlten Flanken des Elektrodenhalters 2A bzw. der Spannzange 2A am vorderen Ende der Schweißdrahtelektrode 2A wird ein Ausglühen der Schweißelektrode 3 sowie eine höhere Energiedichte des erzeugten Lichtbogens LB erreicht. Durch die an dem vordersten Punkt angesetzte mechanische Kontaktierung der Schweißelektrode 3 kann zudem eine höhere Belastung der Schweißelektrode 3 erzielt werden. Die Spannzange bzw. der Elektrodenhalter 2A erlauben in einem nicht eingespannten Zustand ein freies axiales Verschieben bzw. Einstellen der Position der Schweißelektrode 3, wodurch eine Charakteristik des Lichtbogens LB verändert werden kann. Die Spannzange bzw. der Elektrodenhalter 2A wird durch den wassergekühlten gegenläufigen Spann-Kühlkörper 2D kurz hinter der Elektrodenspitze 3A im Spannbereich 2F mit hohen mechanischen Kontaktkräften an die Schweißelektrode 3 im eingespannten Zustand der Einspannvorrichtung 2 gepresst. Dies gewährleistet eine ausgezeichnete Kühlung nahe an der Elektrodenspitze 3A der Schweißelektrode 3, wodurch es möglich ist, die Schweißelektrode 3 während des Hochleistungsschweißprozesses relativ kühl zu halten. Im nicht eingespannten Zustand kann die Schweißelektrode 3 innerhalb des zylinderförmigen Hohlraums bzw. Aufnahmeraums 2B in Längsrichtung lateral verschoben werden, um festzulegen, wie weit die Elektrodenspitze 3A der Schweißelektrode 3 vorne aus dem Schweißbrenner 1 heraussteht bzw. herausragt. Durch Einstellen der Position der Schweißelektrode 3 kann die Schweißcharakteristik des Schweißprozesses beeinflusst werden.

Die Einspannvorrichtung 2 eignet sich insbesondere zum WIG-Hochleistungsschweißen. Während des Schweißprozesses gibt die Gasdüse 6 Schutzgas ab, welches einen Schutzmantel um den Lichtbogen LB und die Schweißzone bildet. Dieses Schutzgas wird bei dem in Figur 1 dargestellten Ausführungsbeispiel über eine Gasleitung 8C der Gasdüse 6 zugeführt. Der Spann-Kühlkonus 2D wird vorzugsweise von einem Kühlfluid durchströmt. Geeignete Kühlflüssigkeiten sind beispielsweise Wasser-Alkohol-Gemische. Der Spann-Kühlkörper 2D weist vorzugsweise einen von dem Kühlfluid durchströmten, von Dichtungsringen 12A, 12B begrenzten Fluidraum 11 auf, der in einem eingespannten Zustand der Einspannvorrichtung 2 den kegelförmigen Endabschnitt 2C des Elektrodenhalters 2A zur Kühlung des freien Endes der darin eingesetzten Schweißelektrode 3 umschließt. Hierdurch kann eine hohe Kühlleistung erzielt und eine geforderte Temperaturstabilität erreicht werden. Durch die Kühlung wird der Schweißprozess stabiler. Zur Kühlung der Schweißelektrode 3 kann ein Rückkühler verwendet werden. Bei dem in Figur 1 dargestellten Ausführungsbeispiel wird dem Schweißbrenner 1 ein Kühlmedium über Leitungen 9A', 9B' zu- und abgeführt. Eine Fixiereinrichtung 10 fixiert die Gasleitung 8C sowie die Kühlleitungen 9A', 9B'. Auch die Gasdüse 6 ist vorzugsweise wassergekühlt, insbesondere durch Kühlleitungen 8A, 8B wie in Figur 3 dargestellt. Der Schweißbrenner 1 besitzt extern verlegte Kühlleitungen, die direkt zu einem Rückkühler führen. Durch die erhöhte Kühlleistung wird ein Ausglühen der Schweißelektrode 3 verhindert, wodurch die Standzeit erhöht und die Zündung verbessert wird.

Figur 2 zeigt den in Figur 1 dargestellten Schweißbrenner 1 im Schnitt und perspektivisch von vorne. Der Schweißbrenner 1 besitzt vorzugsweise einen geschlossenen Kühlkreislauf zur Kühlung der Schweißelektrode 3 während des Schweißprozesses. Der Schweißbrenner 1 besitzt eine Zuführkühlleitung zum Zuführen eines Kühlmediums und eine Abführleitung zum Abführen des Kühlmediums. Das Kühlmedium bzw. Kühlfluid wird an einem hinteren Ende der Einspannvorrichtung 2, die einen Elektrodenhalter 2A mit Endabschnitt 2C und einen Kühlkörper 2D umfasst, eingeführt. Das Kühlmedium bewegt sich in einem Zuführkanal zwischen dem Innenrohr 4 und dem Außenrohr 5 nach vorne in einen Fluidraum 11, der den Spann-Kühlkörper 2D umschließt oder in dem Spann-Kühlkörper 2D integriert ist. Die beim Schweißen entstehende Wärme bzw. Hitze wird somit von der Schweißelektrode 3 mithilfe des Spann-Kühlkörpers 2D abgeleitet, welcher durch das Kühlfluid fortlaufend gekühlt wird. Bei dem in Figur 2 dargestellten Ausführungsbeispiel wird das Kühlfluid auf einer Unterseite des Schweißbrenners 1 dem Fluidraum 11 zugeführt und wandert auf einer Oberseite des Schweißbrenners 1 zwischen dem Innenrohr 4 und dem Außenrohr 5 zurück nach hinten, wo es durch eine Abführleitung an den Rückkühler zurückgeführt wird.

Eine in einer Einspannvorrichtung 2 vorgesehene Kühlung eines erfindungsgemäßen Schweißbrenners 1 ist schematisch auch in Figur 11 dargestellt. Der Schweißbrenner 1 besitzt eine Einspannvorrichtung 2 mit einer darin fest eingespannten Schweißelektrode 3, an deren Spitze 3A ein Lichtbogen LB während des Schweißprozesses entsteht. Der Lichtbogen LB verläuft zwischen der Spitze 3A der Schwei-ßelektrode 3, beispielsweise einer Wolframschweißelektrode, und einem zu schweißenden Werkstück W. Das Kühlmedium wird über eine Kühlfluidzuführleitung 9A zugeführt und nach vorne zu der Kühlfluidkammer 11 geleitet. Das durch den Schweißprozess erwärmte Kühlmedium wird dann von der Fluidkammer 11 über eine Kühlfluidabführleitung 9B nach hinten wieder abgeleitet.

Die innere Kühlfluidzuführleitung 9A und die innere Kühlfluidabführleitung 9B befinden sich zwischen dem Innenrohr 4 und dem Außenrohr 5 des Schweißbrenners 1. Die Kühlfluidzuführleitung 9A ist mit der Kühlfluidanschlussleitung 9A'und die innere Kühlfluidabführleitung 9B ist mit der Kühlfluidanschlussleitung 9B' gemäß den Figuren 1, 3 verbunden.

Figur 12 zeigt zum Vergleich schematisch den Aufbau eines herkömmlichen Schweißbrenners SchB. Auch bei dem herkömmlichen Schweißbrenner SchB wird ein Kühlmedium über eine Zuführleitung zugeführt und über eine Abführleitung abgeführt. Allerdings ist bei dem erfindungsgemäßen Schweißbrenner 1 die Kühlfluidkammer 11 weiter vorne, unmittelbar in der Nähe der Spitze 3A der Schweißelektrode 3 gelegen, während die Kühlfluidkammer bei einem herkömmlichen Schweißbrenner SchB weiter hinten am Körper 3B der Schweißelektrode 3 vorgesehen ist, wie in Figur 12 dargestellt.

Mithilfe des in Figur 11 dargestellten Kühlkreislaufs, der bei der Einspannvorrichtung 2 vorgesehen ist, kann die Schweißelektrode 3 mit besonders hohen elektrischen Strömen I beaufschlagt werden, wobei ein Ausglühen der Schweißelektrode 3 mithilfe des Kühlfluids, welches sich in unmittelbarer Nähe der Schweißelektrodenspitze 3A befindet, verhindert wird. Hierdurch kann eine höhere Energiedichte des Lichtbogens LB erreicht werden. Der erfindungsgemäße Schweißbrenner 1 mit der Einspannvorrichtung 2 kann beispielsweise für Hochleistungs-WIG-Schweißen mit einer Stromstärke von über 300 A eingesetzt werden. Bei einer möglichen Ausführungsform kann der Fluidraum 11 von zwei Dichtungsringen 12A, 12B begrenzt werden, wie in Figur 9 erkennbar. Bei der dargestellten Ausführungsform weist die Einspannvorrichtung 2 somit einen Spann-Kühlkörper 2D mit einem daran anliegenden, von zwei Dichtungsringen 12A, 12B begrenzten Fluidraum 11 auf, der in einem eingespannten Zustand der Einspannvorrichtung 2 den kegelförmigen Endabschnitt 2C des Elektrodenhalters 2A kühlt, der seinerseits ein freies Ende der darin eingesetzten Schweißelektrode 3 kühlt.

Figur 3 zeigt eine perspektivische Ansicht auf den in den Figuren 1, 2 dargestellten Schweißbrenner 1. Man erkennt in Figur 3 die Gasdüse 6, welche die Einspannvorrichtung 2 umschließt. Die Gasdüse 6 ist bei dem dargestellten Ausführungsbeispiel ovalförmig. Die ovalförmige Öffnung der Gasdüse 6 entspricht der Schweißrichtung des Schweißbrenners 1 entlang der Oberfläche des zu schweißenden Werkstückes W. Der Schweißbrenner 1 besitzt bei dem dargestellten Ausführungsbeispiel Leitungen 8A, 8B zur Wasserkühlung der Gasdüse 6. Das Schutzgas wird der Gasdüse 6 über die Anschlussleitung 8C zugeführt. Man erkennt in Figur 3 die Elektrodenspitze 3A der Schweißelektrode 3, die im eingespannten Zustand der Einspannvorrichtung 2 aus der Stirnseite des angepressten Endabschnitts 2C des Elektrodenhalters 2A herausragt. Die Anschlussleitungen 9A', 9B' bilden eine Zuführleitung und eine Abführleitung für das Kühlmedium zur Kühlung der Schwei-βelektrode 3 und sind mit den in Figur 11 dargestellten inneren Zuführ- und Abführleitungen 9A, 9B verbunden.

Figur 4 zeigt ein Ausführungsbeispiel eines Elektrodenhalters 2A, der bei der Einspannvorrichtung 2 verwendet werden kann. Der Elektrodenhalter 2A besitzt eine durchgängige nahezu zylinderförmige Aufnahmeöffnung bzw. Aufnahmeraum 2B mit einem Durchmesser Ø-2B, wie in der Schnittansicht gemäß Figur 5 dargestellt. In einem vorderen Spannbereich 2F mit einer Länge L3 hat Aufnahmeraum 2B einen etwas geringeren Durchmesser Ø-2F als Rest des Aufnahmeraums 2B (Ø-2F < Ø-2B). Weiterhin weist der Elektrodenhalter 2A an der vorderen Seite einen sich kegelförmig verbreiternden Endabschnitt 2C auf. Der Endabschnitt 2C bildet im Schnitt den Rumpf eines gleichschenkeligen Dreiecks, dessen Grundseite die Stirnfläche SF-2C aufweist, welche durch die Stirnfläche SF-2D des Spannkühlkörpers 2D umschlossen wird. Der Elektrodenhalter 2A hat bei dem dargestellten Ausführungsbeispiel eine Gesamtlänge L. Am hinteren Ende weist der Elektrodenhalter 2A ein Gewinde 2E mit einer Länge L2 zum Aufschrauben der Brennerkappe 7 auf. Bei dem dargestellten Ausführungsbeispiel weist der sich kegelförmig ausbreitende Endabschnitt 2C eine Länge L1 auf. Daran schließt sich ein verjüngter Abschnitt 2G mit einer Länge L4 an. Der Endabschnitt 2C besitzt radial angeordnete Spannschlitze SS, die sich durch den verjüngten Abschnitt 2G hindurch erstrecken und eine Länge L5 aufweisen, wie in Fig. 4 dargestellt. Das Außengewinde 2E am hinteren Ende des Elektrodenhalters 2A hat bei dem dargestellten Ausführungsbeispiel eine Länge L2. Der Elektrodenhalter 2A besitzt hinten einen Außendurchmesser d, wie in Figur 4 dargestellt. Der kegelförmige Endabschnitt 2C weitet sich zu einem Außendurchmesser D aus, wie in Figur 4 gezeigt. Hierzu besitzt der Endabschnitt 2C beispielsweise einen Öffnungswinkel α von 30°. Der Endabschnitt 2C besitzt radial angeordnete Spannschlitze SS. Wie in Figur 7 dargestellt, besitzt der Elektrodenhalter 2A bzw. dessen Endabschnitt 2C bei dem dargestellten Ausführungsbeispiel sechs radial angeordnete Spannschlitze SS1 bis SS6, die jeweils mit einem Abstandswinkel β (β = 60°) voneinander beabstandet sind. Die gleichmäßige Beabstandung der Spannschlitze SS erlaubt mittels der Spannbacken SB eine genaue Zentrierung der darin eingespannten Schweißelektrode 3. Der Endabschnitt 2C besitzt vorzugsweise mindestens drei gleichmäßig beabstandete Spannschlitze SS. Figur 6 zeigt den in Figur 4 dargestellten Elektrodenhalter 2A gedreht.

Ferner zeigt Figur 8 den Elektrodenhalter 2A perspektivisch. Die Länge L des Elektrodenhalters 2A kann je nach Anwendungsfall variieren. Der Innendurchmesser Ø-2F des Aufnahmeraums 2B entspricht im Spannbereich 2F dem Außendurchmesser Ø-SE der darin einführbaren Schweißelektrode 3 (Ø-2F = Ø-SE).

Figur 9 zeigt perspektivisch ein Ausführungsbeispiel für einen bei der Einspannvorrichtung 2 verwendbaren Spann-Kühlkörper 2D. Figur 10 zeigt eine Schnittansicht durch den in Figur 9 dargestellten Spann-Kühlkörper 2D. Der Spann-Kühlkörper 2D besitzt vorne eine konusförmige Öffnung 2D-ÖFF, dessen Öffnungswinkel dem Öffnungswinkel α des Endabschnitts 2C entspricht. Der Spann-Kühlkörper 2D wird vorzugsweise in ein vorderes Ende des Innenrohrs 4 eingesetzt und dort eingeschraubt. Hierzu kann der Einspann-Kühlkörper 2D an seinem hinteren Ende ein entsprechendes Gewinde aufweisen. Bei einer möglichen Ausführungsform besteht der Spann-Kühlkörper 2D aus wärmeleitfähigem Kupfer, welches vorzugsweise versilbert ist. Wie man in Figur 9 erkennen kann, werden durch zwei Dichtungsringe 12A, 12B ein Fluidraum 11 für das Kühlfluid definiert, welches die in dem Elektrodenhalter 2A eingesetzte Schweißelektrode 3 kühlt. Ein Austausch der Schweißelektrode 3 ist möglich, ohne dass das Kühlfluid austritt. Ein weiterer Vorteil besteht darin, dass die Schwei-ßelektrode 3 ohne Ausschrauben und Einschrauben des Elektrodenhalters 2A auswechselbar ist, d. h. bei der Montage wird die Schweißelektrode 3 ohne Elektrodenhalter in die Einspannvorrichtung 2 eingesetzt. Beim Entfernen der Schweißelektrode 3 verbleibt der Elektrodenhalter 2A in der Einspannvorrichtung 2 zur Aufnahme der nächsten Schweißelektrode 3. Mit der Einspannvorrichtung 2 kann die Schwei-ßelektrode 3 flächig mithilfe der zwischen den Anschlüssen SS vorgesehenen Klemmbacken bzw. Spannbacken SB fest eingespannt werden. Die Schnellspannvorrichtung 2 erlaubt ein einfaches Einspannen und Wechseln der Schweißelektrode 3. Die austauschbare Schweißelektrode 2 selbst benötigt keinen Elektrodenhalter, sondern wird in den Elektrodenhalter 2A der Einspannvorrichtung 2 eingesetzt.

Der Schweißbrenner 1 kann bei einer möglichen Ausführungsform an einen Roboterarm an einer Schweißanlage angebracht werden. Alternativ kann es sich bei dem Schweißbrenner 1 um einen manuell geführten Schweißbrenner handeln. Zum Austauschen und Einstellen der Schweißelektrode 3 ist die Schweißelektrode 3 von vorne einfach zugänglich, sodass sich die Handhabung des Schweißbrenners 1 vereinfacht. Dies erlaubt ein Nachschleifen der Schweißelektrodenspitze 3A. Der Schweißbrenner 1 mit der Einspannvorrichtung 2 bietet höchste Lichtbogenqualität und hohe Zündsicherheit. Aufgrund der guten Kühlung werden zudem die eingesetzten Schweißelektroden 3 weniger beansprucht und können länger benutzt werden. Daher ist der erfindungsgemäße Schweißbrenner 1 besonders ressourcenschonend. Da der Elektrodenhalter 2D beim Austausch einer Schweißelektrode in der Einspannvorrichtung 2 verbleibt, ist die Montage der Schweißelektrode besonders einfach und schnell vornehmbar.

Weitere Ausführungsformen sind möglich. Bei dem in Figur 1 dargestellten Ausführungsbeispiel wird die Schweißelektrode 3 von vorne eingeführt und für den Schweißprozess eingespannt, indem der Elektrodenhalter 2A mechanisch nach hinten gezogen wird. Bei einer alternativen Ausführungsform wird die Schwei-ßelektrode 3 von hinten in den Elektrodenhalter 2A mittels einer entsprechenden Öffnung eingeführt. Bei einer weiteren alternativen Ausführungsform können mehrere Schweißelektroden 3 auf Vorrat übereinandergestapelt innerhalb des Aufnahmeraums 2B des Elektrodenhalters 2A vorgesehen werden. Bei dieser Ausführungsform wird eine verbrauchte Schweißelektrode 3 vorne aus dem Schweißbrenner 1 entnommen und die nächste innerhalb des Aufnahmeraums 2B befindliche Schweißelektrode 3 wird für den weiteren Schweißprozess nach vorne geführt bzw. geschoben. Bei dieser Ausführungsform können sich beispielsweise zwei oder mehr Schweißelektroden 3 innerhalb des Aufnahmeraums 2B des Elektrodenhalters 2A befinden und bei Bedarf nacheinander nach vorne geführt werden. Bei dieser Ausführungsform dient der Aufnahmeraum 2B als Vorratsraum bzw. Magazin einer Gruppe von darin enthaltener Schweißelektroden 3, die nacheinander benutzt werden können.

Bei einer weiteren möglichen alternativen Ausführungsform erfolgt die Positionierung der Schweißelektrode 3 durch Axial- bzw. Längsverschiebung nicht manuell, sondern automatisch mithilfe eines Aktuators. Bei einer weiteren möglichen Ausführungsform kann die Länge, mit der das freie Ende bzw. die Elektrodenspitze 3A aus dem kegelförmigen Endabschnitt 2C des Schweißbrenners 1 herausragt, mithilfe eines Aktuators genau automatisch eingestellt werden. Bei einer weiteren möglichen Ausführungsform kann dies auch während des Schweißvorganges zur Beeinflussung des Lichtbogens LB erfolgen. Gleichzeitig kann eine Regulierung des ummantelnden Schutzgases, welches aus der Gasdüse 6 strömt, erfolgen. Bei einer weiteren möglichen Ausführungsform des erfindungsgemäßen Schweißbrenners 1 kann die Kühlrate, mit der das Kühlmedium die Einspannvorrichtung 2 durchströmt bzw. an ihr vorbeiströmt, eingestellt oder geregelt werden. Bei einer weiteren möglichen Ausführungsform wird hierzu die Temperatur T der Schweißelektrode 3 sensorisch laufend überwacht. Bei Ansteigen der Temperatur der Schweißelektrode 3 wird die Durchströmrate des Kühlmediums zur Erhöhung der Kühlung automatisch nach oben geregelt. Bei einer weiteren möglichen Ausführungsform wird die Betriebszeit und/oder der Verschleiß der Schweißelektrode 3 überwacht und bei Überschreiten eines einstellbaren Schwellenwerts die Schweißelektrode 3 automatisch durch eine unverbrauchte neue Schweißelektrode 3 ersetzt, die sich beispielsweise in dem Aufnahmeraum bzw. dem Magazin 2B des Elektrodenhalters 2A hinter der Schweißelektrode 3 befindet. Die Einspannvorrichtung 2 eignet sich für jeglichen Schweißbrenner 1, der eine nicht abschmelzbare Schweißelektrode 3 verwendet. Die Stirnfläche SF-2C des Endabschnitts 2C und die Stirnfläche SF-2D des Spann-Kühlkörpers 2D bilden im eingespannten Zustand der Einspannvorrichtung 2 zusammen eine zusammenhängende großflächige Kühlstirnfläche KSF. Die beiden Stirnflächen SF-2C, SF-2D sind vorzugsweise derart groß dimensioniert, dass sie ausreichend Wärme von der Schweißelektrode 3 während des Schweißprozesses ableiten. Hierbei werden sie von dem den Spann-Kühlkörper 2D durchströmenden bzw. daran vorbeiströmenden Kühlmedium unterstützt. Bei einer möglichen Ausführungsform weist die Kühlstirnfläche KSF zusätzlich kleine, nach vorn ragende Kühlrippen auf, die im eingespannten Zustand nahtlos über beide Stirnflächen SF-2C, SF-2D der Einspannvorrichtung 2 hinweg in Querrichtung vertikal zu der eingespannten Schweißelektrode 3 verlaufen. Die geschlossene gleichmäßige Kühlstirnfläche KSF bietet den weiteren Vorteil, dass für den Nutzer ohne weiteres direkt erkennbar ist, wie weit die Elektrodenspitze 3A der Schweißelektrode 3 aus dem Elektrodenhalter 2D herausragt. Er kann so entsprechende, notwendige Nachjustierungen vornehmen, indem er die Einspannvorrichtung 2 zunächst durch Schrauben der Brennerkappe 7 entspannt, dann die Schweißelektrode 3 in Längsrichtung verschiebt und schließlich die Einspannvorrichtung 2 durch Schrauben der Brennerkappe 7 wieder festspannt.

## Patentansprüche

1. Schweißbrenner (1) mit einem Innenrohr (4), das von einem Außenrohr (5) umschlossen ist, und mit einer Einspannvorrichtung (2) zum Einspannen einer nicht abschmelzbaren Schweißelektrode (3),
wobei die Einspannvorrichtung (2) einen Spann-Kühlkörper (2D) und einen Elektrodenhalter (2A) aufweist, der einen in Längsrichtung verlaufenden Aufnahmeraum (2B) zur Aufnahme der Schweißelektrode (3) besitzt, welcher an seinem vorderen Ende einen verengten Spannbereich (2F) aufweist, wobei der Spannbereich (2F) in einen verbreiterten Aufnahmeraum übergeht, wobei der Elektrodenhalter (2A) an seinem vorderen Ende einen Endabschnitt (2C) aufweist, welcher sich zum vorderen Ende kegelförmig verbreitert und von dem Spann-Kühlkörper (2D) der Einspannvorrichtung (2) zum Halten der Schweißelektrode (3) zusammenpressbar ist,
wobei der Spann-Kühlkörper (2D) in einem eingespannten Zustand der Einspannvorrichtung (2) mechanisch gegen eine Mantelfläche (MF-2C) des kegelförmigen Endabschnitts (2C) des Elektrodenhalters (2A) gedrückt wird, so dass im eingespannten Zustand eine großflächige Kühlstirnfläche (KSF) zum Kühlen der Schweißelektrode (3) ausgebildet ist,
wobei
der Spann-Kühlkörper (2D) der Einspannvorrichtung (2) zum Kühlen eines freien Elektrodenendes der Schweißelektrode (3) mittels eines Kühlfluids einen von dem Kühlfluid durchströmbaren Fluidraum (11) aufweist, der in einem eingespannten Zustand der Einspannvorrichtung (2) den kegelförmigen Endabschnitt (2C) des Elektrodenhalters (2A) zur Kühlung der darin eingesetzten Schweißelektrode (3) umschließt, und
charakterisiert dadurch, dass
das Kühlmedium über eine Zuführleitung (9A) zwischen dem Innenrohr (4) und dem Außenrohr (5) dem Fluidraum (11) zuführbar und über eine Abführleitung (9B) zwischen dem Innenrohr (4) und dem Außenrohr (5) ableitbar ist.

2. Schweißbrenner nach Anspruch 1, wobei der Spann-Kühlkörper (2D) der Einspannvorrichtung (2) mittels einer Kühlflüssigkeit als Kühlfuid durchströmbar ist.

3. Schweißbrenner nach Anspruch 2, wobei der Fluidraum (11) von Dichtungsringen (12A, 12B) begrenzt ist.

4. Schweißbrenner nach einem der Ansprüche 1 bis 3,
wobei der sich kegelförmig verbreiternde Endabschnitt (2C) des Elektrodenhalters (2A) sechs radial angeordnete durch sechs Spannschlitze (SS1-SS6) getrennte Spannbacken (SB1-SB6) aufweist, die in dem eingespannten Zustand der Einspannvorrichtung (2) zum Anpressen des kegelförmigen Endabschnitts (2C) des Elektrodenhalters (2A) an die in den Aufnahmeraum (2B) des Elektrodenhalters (2A) eingesetzte Schweißelektrode (3) vorgesehen sind,
wobei die Spannbacken (SB) des Endabschnitts (2C) jeweils einen verjüngten Abschnitt (V) aufweisen.

5. Schweißbrenner nach einem der vorangehenden Ansprüche 1 bis 4,
wobei die in dem Aufnahmeraum (2B) des Elektrodenhalters (2A) eingesetzte Schweißelektrode (3) in einem nicht gespannten Zustand der Einspannvorrichtung (2) in dem Aufnahmeraum (2B) des Elektrodenhalters zum Einstellen eines freien Elektrodenendes (2A) der Schweißelektrode (3) in Längsrichtung manuell oder mittels eines Aktuators lateral verschiebbar ist.

6. Schweißbrenner nach einem der vorangehenden Ansprüche 1 bis 5,
wobei der sich kegelförmig verbreiternde Endabschnitt (2C) des Elektrodenhalters (2A) einen Öffnungswinkel (2) von 20 bis 45°, insbesondere 30°, aufweist.

7. Schweißbrenner nach einem der vorangehenden Ansprüche 1 bis 6,
wobei der Spannbereich (2F) des Elektrodenhalters (2A) zwischen 4 und 10 mm lang ist.

8. Schweißbrenner nach einem der vorangehenden Ansprüche 1 bis 7,
wobei der Spann-Kühlkörper (2D) der Einspannvorrichtung (2) von einer Gasdüse (6) zur Abgabe eines Schutzgases umschlossen ist.

9. Schweißbrenner nach einem der vorangehenden Ansprüche 1 bis 8,
wobei der Elektrodenhalter (2A) der Einspannvorrichtung (2) im Bereich seines hinteren Endes ein Gewinde (2E) aufweist.

10. Schweißbrenner nach Anspruch 9,
wobei der Elektrodenhalter (2A), in dessen Aufnahmeraum (2B) von vorne eine Schweißelektrode (3) eingesetzt ist, manuell durch Aufschrauben einer Brennerkappe(7) derart nach hinten gezogen werden kann, dass die Mantelfläche (MF_2C) des an dem vorderen Ende des Elektrodenhalters (2A) vorgesehenen kegelförmigen Endabschnitts (2C) beim Aufschrauben gegen den Spann-Kühlkörper (2D) gedrückt wird, wobei aufgrund der in dem Endabschnitt (2C) des Elektrodenhalters (2A) vorhandenen Spannschlitze (SS) die Spannbacken (SB) des Endabschnitts (2C) des Elektrodenhalters (2A) beim Aufschrauben gegen die in dem Aufnahmeraum (2B) des Elektrodenhalters (2A) eingesetzte Schwei-ßelektrode (3) gepresst werden, um die Schweißelektrode (3) zentrisch zu halten und um die geschlossene ringförmige Kühlstirnfläche (KSF) zu bilden.

11. Schweißbrenner nach einem der vorangehenden Ansprüche 6 bis 10,
wobei der den Elektrodenhalter (2A) umfassende Spann-Kühlkörper (2D) eine kegelstumpfförmige Öffnung (2D-ÖFF) aufweist, welche die Mantelfläche (MF_2C) des Endabschnitts (2C) des Elektrodenhalters (2A) umschließt und einen entsprechenden Öffnungswinkel (α) aufweist.

12. Schweißbrenner nach einem der vorangehenden Ansprüche 1 bis 11,
wobei in dem eingespannten Zustand eine Stirnfläche (SF_2D) des Spann-Kühlkörpers (2D) im Wesentlichen mit einer vorderen Stirnfläche (SF-2C) des Endabschnitts (2C) des Elektrodenhalters (2A) abschließt, um die Kühlstirnfläche (KSF) zu bilden, welche beide Stirnflächen (SF-2C, SF-2D) umfasst.

13. Schweißbrenner nach einem der vorangehenden Ansprüche 1 bis 12,
bei dem eine oder mehrere Schweißelektroden (3) von vorne oder von hinten durch eine Öffnung in den Aufnahmeraum (2B) des Elektrodenhalters (2A) der Einspannvorrichtung (2) einführbar sind.

## Claims

1. Welding torch (1), comprising an inner pipe (4) enclosed by an outer pipe (5) and comprising a clamping device (2) for clamping a non-fusible welding electrode (3),
the clamping device (2) having a clamping cooling element (2D) and an electrode holder (2A), which possesses a receiving space (2B) extending in the longitudinal direction for receiving the welding electrode (3), said space having at the front end thereof a narrowed clamping region (2F), the clamping region (2F) transitioning into a widened receiving space, the electrode holder (2A) having at the front end thereof an end portion (2C) which widens conically towards the front end and can be compressed by the clamping cooling element (2D) of the clamping device (2) so as to hold the welding electrode (3),
the clamping cooling element (2D), in a clamped state of the clamping device (2), being mechanically pressed against an outer surface (MF-2C) of the conical end portion (2C) of the electrode holder (2A), in such a way that, in the clamped state, a large-area cooling end face (KSF) for cooling the welding electrode (3) is formed, the clamping cooling body (2D) of the clamping device (2) having, for cooling a free electrode end of the welding electrode (3) using a cooling fluid, a fluid space (11) which can be flowed through by the cooling fluid and which, in a clamped state of the clamping device (2), encloses the conical end portion (2C) of the electrode holder (2A) to cool the welding electrode (3) inserted into in, and
**characterised in that** the cooling medium can be supplied to the fluid space (11) via a supply line (9A) between the inner pipe (4) and the outer pipe (5) and drained via a discharge line (9B) between the inner pipe (4) and the outer pipe (5).

2. Welding torch according to claim 1, wherein the clamping cooling element (2D) of the clamping device (2) can be flowed through by a cooling liquid as the cooling fluid.

3. Welding torch according to claim 2, wherein the fluid space (11) is delimited by sealing rings (12A, 12B).

4. Welding torch according to any of claims 1 to 3,
wherein the conically widening end portion (2C) of the electrode holder (2A) has six radially arranged clamping jaws (SB1-SB6), which are separated by six clamping slots (SS1-SS6) and which, in the clamped state of the clamping device (2), are provided for pressing the conical end portion (2C) of the electrode holder (2A) onto the welding electrode (3) inserted into the receiving space (2B) of the electrode holder (2A),
wherein the clamping jaws (SB) of the end portion (2C) each have a tapered portion (V).

5. Welding torch according to any of preceding claims 1 to 4,
wherein the welding electrode (3) inserted into the receiving space (2B) of the electrode holder (2A) can, in an unclamped state of the clamping device (2), be displaced laterally in the receiving space (2B) of the electrode holder, manually or by means of an actuator, so as to adjust a free electrode end (2A) of the welding electrode (3) in the longitudinal direction.

6. Welding torch according to any of preceding claims 1 to 5,
wherein the conically widening end portion (2C) of the electrode holder (2A) has an opening angle (2) of 20 to 45°, in particular 30°.

7. Welding torch according to any of preceding claims 1 to 6,
wherein the clamping region (2F) of the electrode holder (2A) is between 4 and 10 mm long.

8. Welding torch according to any of preceding claims 1 to 7,
wherein the clamping cooling body (2D) of the clamping device (2) is enclosed by a gas nozzle (6) for emitting a protective gas.

9. Welding torch according to any of preceding claims 1 to 8,
wherein the electrode holder (2A) of the clamping device (2) has a thread (2E) in the region of the rear end thereof.

10. Welding torch according to claim 9,
wherein the electrode holder (2A), into the receiving space (2B) of which a welding electrode (3) is inserted from the front, can be pulled rearwards manually, by unscrewing a torch cap (7), in such a way that the outer surface (MF_2C) of the conical end portion (2C) provided on the front end of the electrode holder (2A) is pressed against the clamping cooling element (2D) during the unscrewing, the clamping jaws (SB) of the end portion (2C) of the electrode holder (2A), as a result of the clamping slot (SS) present in the end portion (2C) of the electrode holder (2A), being pressed during the unscrewing against the welding electrode (3) inserted into the receiving space (2B) of the electrode holder (2A), so as to hold the welding electrode (3) centrally and so as to form the closed annular cooling end face (KSF).

11. Welding torch according to any of claims 6 to 10,
wherein the clamping cooling element (2D) comprising the electrode holder (2A) has a frustum-shaped opening (2DOFF), which encloses the outer surface (MF_2C) of the end portion (2C) of the electrode holder (2A) and has a corresponding opening angle (a).

12. Welding torch according to any of preceding claims 1 to 11,
wherein, in the clamped state, an end face (SF_2D) of the clamping cooling element (2D) substantially terminates with a front end face (SF-2C) of the end portion (2C) of the electrode holder (2A) so as to form the cooling end face (KSF) which comprises the two end faces (SF-2C, SF-2D) .

13. Welding torch according to any of preceding claims 1 to 12,
in which one or more welding electrodes (3) can be introduced into the receiving space (2B) of the electrode holder (2A) of the clamping device (2) through an opening from in front or from behind.

## Revendications

1. Torche de soudage (1) comportant un tube intérieur (4) qui est entouré d'un tube extérieur (5) ainsi qu'un dispositif de serrage (2) pour serrer une électrode de soudage (3) non fusible,
dans laquelle le dispositif de serrage (2) présente un dissipateur thermique de serrage (2D) et un porte-électrode (2A) qui possède un espace de réception (2B) s'étendant dans la direction longitudinale pour recevoir l'électrode de soudage (3), lequel présente à son extrémité avant une zone de serrage rétrécie (2F),
dans laquelle la zone de serrage (2F) se transforme en un espace de réception élargi,
dans laquelle le porte-électrode (2A) présente à son extrémité avant une section d'extrémité (2C) qui s'élargit en forme de cône vers l'extrémité avant et qui peut être comprimée par le dissipateur thermique de serrage (2D) du dispositif de serrage (2) pour maintenir l'électrode de soudage (3),
dans laquelle le dissipateur thermique de serrage (2D) est, dans un état serré du dispositif de serrage (2), pressé mécaniquement contre une surface périphérique (MF-2C) de la section d'extrémité conique (2C) du porte-électrode (2A), de sorte que, dans l'état serré, une surface frontale de refroidissement (KSF) de grande surface est formée pour refroidir l'électrode de soudage (3),
dans laquelle le dissipateur thermique de serrage (2D) du dispositif de serrage (2) présente, pour le refroidissement d'une extrémité d'électrode libre de l'électrode de soudage (3) au moyen d'un fluide de refroidissement, une chambre de fluide (11) pouvant être traversée par le fluide de refroidissement, qui, dans un état serré du dispositif de serrage (2), entoure la section d'extrémité conique (2C) du porte-électrode (2A) pour le refroidissement de l'électrode de soudage (3) qui y est insérée, et
**caractérisée en ce que**
le fluide de refroidissement peut être amené à la chambre de fluide (11) par une conduite d'amenée (9A) entre le tube intérieur (4) et le tube extérieur (5) et peut être évacué par une conduite d'évacuation (9B) entre le tube intérieur (4) et le tube extérieur (5).

2. Torche de soudage selon la revendication 1, dans laquelle le dissipateur thermique de serrage (2D) du dispositif de serrage (2) peut être traversé par un liquide de refroidissement servant de fluide de refroidissement.

3. Torche de soudage selon la revendication 2, dans laquelle la chambre de fluide (11) est délimitée par des bagues d'étanchéité (12A, 12B).

4. Torche de soudage selon l'une des revendications 1 à 3, dans laquelle la section d'extrémité (2C) s'élargissant en forme de cône du porte-électrode (2A) présente six mâchoires de serrage (SB1-SB6) disposées radialement et séparées par six fentes de serrage (SS1-SS6), qui sont prévues, dans l'état serré du dispositif de serrage (2), pour presser la section d'extrémité (2C) en forme de cône du porte-électrode (2A) contre l'électrode de soudage (3) insérée dans l'espace de réception (2B) du porte-électrode (2A),
dans laquelle les mâchoires de serrage (SB) de la section d'extrémité (2C) présentent chacune une section rétrécie (V) .

5. Torche de soudage selon l'une des revendications 1 à 4 précédentes,
dans laquelle l'électrode de soudage (3) insérée dans l'espace de réception (2B) du porte-électrode (2A) peut être déplacée latéralement dans la direction longitudinale, manuellement ou au moyen d'un actionneur, dans un état non serré du dispositif de serrage (2) dans l'espace de réception (2B) du porte-électrode pour régler une extrémité d'électrode libre (2A) de l'électrode de soudage (3).

6. Torche de soudage selon l'une des revendications 1 à 5 précédentes,
dans laquelle la section d'extrémité (2C) s'élargissant en forme de cône du porte-électrode (2A) présente un angle d'ouverture (2) de 20 à 45°, en particulier de 30°.

7. Torche de soudage selon l'une des revendications 1 à 6 précédentes,
dans laquelle la zone de serrage (2F) du porte-électrode (2A) a une longueur comprise entre 4 et 10 mm.

8. Torche de soudage selon l'une des revendications 1 à 7 précédentes,
dans laquelle le dissipateur thermique de serrage (2D) du dispositif de serrage (2) est entouré d'une buse de gaz (6) pour délivrer un gaz de protection.

9. Torche de soudage selon l'une des revendications 1 à 8 précédentes,
dans laquelle le porte-électrode (2A) du dispositif de serrage (2) présente un filetage (2E) dans la zone de son extrémité arrière.

10. Torche de soudage selon la revendication 9,
dans laquelle le porte-électrode (2A), dans l'espace de réception (2B) duquel une électrode de soudage (3) est insérée par l'avant, peut être tiré manuellement vers l'arrière en vissant un capuchon de torche (7) de telle sorte que la surface périphérique (MF_2C) de la section d'extrémité conique (2C) prévue à l'extrémité avant du porte-électrode (2A) soit pressée contre le dissipateur thermique de serrage (2D) lors du vissage,
dans laquelle, en raison des fentes de serrage (SS) présentes dans la section d'extrémité (2C) du porte-électrode (2A), les mâchoires de serrage (SB) de la section d'extrémité (2C) du porte-électrode (2A) sont pressées contre l'électrode de soudage (3) insérée dans l'espace de réception (2B) du porte-électrode (2A) lors du vissage, afin de maintenir l'électrode de soudage (3) centrée et de former la surface frontale de refroidissement annulaire fermée (KSF).

11. Torche de soudage selon l'une des revendications 6 à 10 précédentes,
dans laquelle le dissipateur thermique de serrage (2D) comprenant le porte-électrode (2A) présente une ouverture tronconique (2D-ÔFF) qui entoure la surface périphérique (MF_2C) de la section d'extrémité (2C) du porte-électrode (2A) et présente un angle d'ouverture correspondant (a).

12. Torche de soudage selon l'une des revendications 1 à 11 précédentes,
dans laquelle, dans l'état serré, une face frontale (SF_2D) du dissipateur thermique de serrage (2D) est sensiblement en contact avec une face frontale avant (SF-2C) de la section d'extrémité (2C) du porte-électrode (2A) pour former la face frontale de refroidissement (KSF) qui comprend les deux faces frontales (SF-2C, SF-2D) .

13. Torche de soudage selon l'une des revendications 1 à 12 précédentes,
dans laquelle une ou plusieurs électrodes de soudage (3) peuvent être introduites par l'avant ou par l'arrière à travers une ouverture dans l'espace de réception (2B) du porte-électrodes (2A) du dispositif de serrage (2).
